(19) Europäisches Patentamt
European Patent Office
Office européen des brevets

(11) EP 1 029 878 A1

(12) **EUROPÄISCHE PATENTANMELDUNG**

(43) Veröffentlichungstag:
**23.08.2000 Patentblatt 2000/34**

(51) Int. Cl.[7]: **C08G 18/50**, C08J 9/00, C08G 77/46, C08L 83/12

(21) Anmeldenummer: **00102482.7**

(22) Anmeldetag: **05.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.02.1999 DE 19907322**

(71) Anmelder: **Goldschmidt AG**
**45127 Essen (DE)**

(72) Erfinder:
- **Burkhart, Georg, Dr.**
**45239 Essen (DE)**
- **Weier, Andreas, Dr.**
**45289 Essen (DE)**

# (54) Verwendung von organofunktionell modifizierten Polysiloxanen bei der Herstellung von Polyurethanschaum

(57) Die Erfindung betrifft die Verwendung einer Mischung von Si-C- bzw. Si-O-C-verknüpften Silicon-Polyether-Blockcopolymeren als Additiv bei der Polyurethanschaumherstellung.

EP 1 029 878 A1

Printed by Xerox (UK) Business Services
2.16.7 (HRS)/3.6

## Beschreibung

Die Erfindung betrifft die Verwendung von Polysiloxan-Polyoxyalkylen-Copolymeren, die modifizierte Polyoxyalkylenbausteine enthalten, bei der Herstellung von Polyurethanschäumen.

Polysiloxan-Polyoxyalkylen-Blockcopolymere werden bei der Herstellung von Polyurethanschäumen verwendet. Sie ermöglichen die Ausbildung einer gleichmäßigen Porenstruktur und stabilisieren den Schaum während des Herstellungsprozesses.

Nicht alle Polysiloxan-Polyoxyalkylen-Blockcopolymere sind für diese Anwendung brauchbar. Die Verwendbarkeit wird durch ein fein einzustellendes Gleichgewicht der Polysiloxanblöcke und der Polyoxyalkylenblöcke im Copolymeren beeinflußt. Der Aufbau der beiden Blöcke ist somit von großer Bedeutung. Die Strukturen der Blöcke können mit einer Vielzahl von Parametern variiert werden.

Der Polyoxyalkylenblock kann bezuglich seiner Zusammensetzung aus den Oxyalkyleneinheiten verändert werden, insbesondere sind Oxyethylen, Oxypropylen und Oxybutylen zu nennen. Unter Zusammensetzung muß in diesem Zusammenhang sowohl die relative Anzahl als auch die Anordnung der Oxyalkyleneinheiten verstanden werden. Weiterhin können das Molekulargewicht und die Endgruppe des Polyoxyalkylenblocks variiert werden. Der Polyoxyalkylenblock kann über eine hydrolysestabile Si-C-Bindung oder eine weniger hydrolysestabile Si-O-C-Bindung mit dem Polysiloxan verknüpft sein.

Das Polysiloxan kann bezüglich der Anzahl der Siloxaneinheiten, der Verzweigungen und der Zahl der Verknüpfungsmöglichkeiten mit dem Polyoxyalkylen verändert werden.

Die Effektivität eines Polysiloxan-Polyoxyalkylen-Copolymeren bei der Schaumstabilisierung kann nur in sehr begrenztem Maße vorausgesagt werden. Die Expertise in diesem Bereich besteht also darin, die Auswirkungen der möglichen Strukturveränderungen empirisch zu untersuchen.

Polysiloxan-Polyoxyalkylen-Blockcopolymere sind in zahlreichen Publikationen beschrieben. Die folgenden Zitate sind daher nur als Auswahl zu sehen.

DE-A-15 70 647 beschäftigt sich mit der Si-O-C-Verknüpfung von Chloropolysiloxanen mit Polyoxyalkyleneinheiten, von denen 40 bis 70 % Molekulargewichte von 1000 bis 3000 haben, vorzugsweise mit sekundären OH-Gruppen, und bis zu 50 OH-Äquivalentprozente ein Molekulargewicht von 130 bis 3500 aufweisen, deren Aufbau aus Ethylenoxid und/oder Propylenoxid besteht. Bevorzugt wird ein Molekulargewicht bis zu 1750.

DE-A-16 94 366 betrifft die Verwendung von Polysiloxan-Polyoxyalkylen-Copolymeren mit folgendem Aufbau als Schaumstabilisatoren:

> 25 bis 70 % des Gewichtes bestehen aus einem Polyoxyalkylen mit einem mittleren Molekulargewicht von 1600 bis 4000, mit einem Ethylenoxidgehalt von 20 bis 100 Gew.-%, das andere Monomere ist, falls vorhanden, Propylenoxid oder optional höhere Alkylenoxide, und
> 30 bis 75 Gew.-% aus einem Polyoxyalkylen mit einem mittleren Molekulargewicht von 400 bis 1200, mit einem Ethylenoxidgehalt von 65 bis 100 Gew.-%, das andere Monomere ist, falls vorhanden, Propylenoxid oder optional höhere Alkylenoxide.

EP-A-0 275 563 beschreibt ein Blockcopolymer, welches aus drei verschiedenen Polyoxyalkyleneinheiten aufgebaut ist. Ein Block enthält 20 bis 60 Gew.-% Oxyethyleneinheiten und hat ein Molekulargewicht von 3000 bis 5500, ein weiterer Block enthält 20 bis 60 Gew.-% Oxyethyleneinheiten bei einem Molekulargewicht von 800 bis 2900 und ein dritter Block besteht nur aus Polyoxypropylen und hat ein Molekulargewicht von 130 bis 1200.

Trotz der so erhältlichen Vielzahl von Siloxan-Polyether-Blockcopolymeren bedingt die große Anzahl der Einsatzgebiete für diese Wirksubstanzen, z. B. als Additive für lösungsmittelhaltige und auch lösungsmittelarme Lacke, Farben und Pasten, zur Beschichtung von Textilien und Papier (Tissues), als Ausgangsstoff für Vernetzungsreaktionen, als Entschäumer, als Emulgatoren, als Additive in Kosmetikzubereitungen, als Stabilisatoren für das weite Feld der PU-Schaumherstellung (zum einen wegen der Vielzahl der möglichen Polyurethan-Schaumtypen, wie z. B. Weichschaum, Hartschaum, Esterschaum, Kaltschaum, Verpackungsschaum, flammlaminierbarer Schaum, Formschaum, Integralschaum etc., zum anderen wegen neuer Verschäumungstechniken, wie Variable Pressure Foaming, Verschäumungen mit unter Druck stehenden inerten Gasen, oder auch "Forced Cooling Processes", z. B. Enviro-cure, Fa. Crain Industries), die Notwendigkeit, nach weiter verbesserten Strukturen zu suchen.

Abgesehen von der Vielzahl der möglichen Kombinationen von verschiedenen Siloxanketten unterschiedlichen Modifizierungsgrades und unterschiedlicher Modifizierungsstellen mit Polyetherseitenketten verschiedenen Molgewichtes, EO-PO-Verhältnisses, verschiedener Endgruppen, evtl. auch in Kombination mit anderen modifizierenden Gruppen am Siloxan, ist eine grundlegende Unterscheidung zwischen verwendeten Stabilisatoren die Art der Herstellung der entsprechenden polyethermodifizierten Siloxane. Dabei sind generell zwei Wege beschrieben:

Zum einen die Synthese der hydrolysestabilen Si-C-Bindung durch eine Hydrosilylierungsreaktion zwischen einem SiH-gruppenhaltigen Siloxan und einem olefinisch substituierten Polyether oder die Synthese einer weniger

hydrolysestabilen Si-O-C-Bindung durch die Verknüpfung von chlorsubstituierten Siloxanen mit hydroxygruppen-funktionellen Polyethern. Die Bindung von Substituenten an ein Polysiloxan kann durch zwei verschiedene Arten der chemischen Umsetzung erfolgen. Durch Hydrolyse von Chlorsiloxanen mit Polyethern unter Abspaltung von Chlorwasserstoff wird eine Si-O-C-Bindung geknüpft. Die Herstellung dieser Verbindungen kann den deutschen Patentschriften 10 12 602, 10 40 251 und 11 20 147 sowie der USA-Patentschrift 3 115 512 entnomen werden.

Die zweite Möglichkeit ist die sogenannte Hydrosilylierungsreaktion, bei der die Reste $R^3$ und $R^4$ an das Molekül des Polysiloxans durch Addition an SiH-Gruppen des Polysiloxans in Anwesenheit eines Hydrosilylierungskatalysators, unter Knüpfung einer Si-C-Bindung, eingeführt wird. Nach dem Stand der Technik werden für die letztgenannte Möglichkeit Platin-Katalysatoren, wie zum Beispiel cis-Dichlordiaminplatin(II) oder Hexachloroplatin(IV)säure, verwendet. Letztgenannte Möglichkeit ist in der USA-Patentschrift 2 846 458 sowie den Auslegeschriften 12 20 615 und 11 53 166 beschrieben.

Üblicherweise werden diese Substanzen bei der Herstellung von Polyurethanen als einheitliche Substanzen oder allenfalls als Mischung von Siliconpolyether-Copolymeren des gleichen Herstellungstyps verwendet. In einigen Fällen (z. B. im Esterschaum) werden die eingesetzten Silicon-Polyether-Copolymere auch mit anderen oberflächenaktiven Substanzen kombiniert, um z. B. die Emulsionswirkung der Additive zu verbessern.

Überraschenderweise ist nun gefunden worden, daß die Mischung von unterschiedlichen Siliconpolyether-Copolymertypen, d. h. die Verwendung von sowohl Si-C- als auch Si-O-C-verknüpfter Siliconpolyether-Blockcopolymerer in einer Mischung besondere Eigenschaftskombinationen ermöglicht. Besonders sticht hierbei die mögliche Kombination von Aktivität und Zellfeinheit hervor.

Die vorliegende Erfindung behandelt demzufolge die Verwendung von verbesserten Polysiloxan-Polyoxyalkylen-Blockcopolymeren als Additive bei der Herstellung von Polyurethanschäumen.

Dabei handelt es sich um Blockcopolymere der allgemeinen Formel I

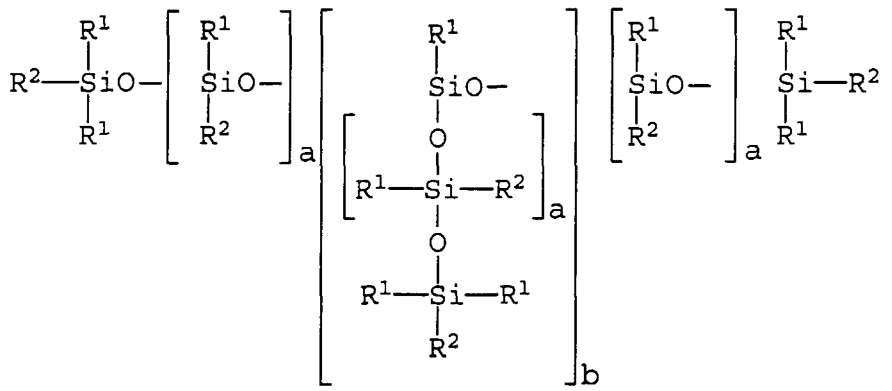

wobei die Reste

$R^1$ Alkylreste oder Arylreste sind,
$R^2$ $R^1$ und/oder $R^3$ und/oder $R^4$ sind,

$R^3$ ein Polyetherrest der Formel II

$-(Y)_e[O(C_2H_{4-d}R'_dO)_m(C_xH_{2x}O)_pZ]_w$ ist, mit der Maßgabe, daß
e = 0 oder 1,
w = 1 bis 4,
d = 1 bis 3,
$m \geq 1$,
x = 2 bis 4, erhältlich durch Verwendung von $C_2H_4O$, $C_3H_6O$ und $C_4H_8O$-Einheiten entweder einzeln oder in Kombination, und
$p \geq 1$ sind, und

Y ein (w+1)-bindiger Kohlenwasserstoffrest ist, der auch verzweigt sein kann,
R' ausgewählt aus der Gruppe der einwertigen, gegebenenfalls aromatischen Kohlenwasserstoffreste von $C_3$ bis $C_{18}$ ist,
Z ein Wasserstoffrest oder ein einwertiger organischer Rest ist,

die Summe $m + p = 1$ bis 150 ist,

$R^4$ ein Polyetherrest der Formel III

$-(F)_f[O(C_xH_{2x}O)_rZ]_g$ ist, mit der Maßgabe, daß
f = 0 oder 1,
x = 2 bis 4, erhältlich durch Verwendung von $C_2H_4O$, $C_3H_6O$ und $C_4H_8O$-Einheiten entweder einzeln oder in Kombination,
g = 1 bis 4 und
$r \geq 1$ sind,

F ein (g+1)-bindiger Kohlenwasserstoffrest ist, der auch verzweigt sein kann,

a eine Zahl von 1 bis 100 ist, wenn b eine Zahl von 6 bis 8 ist,
a eine Zahl von 1 bis 200 ist, wenn b eine Zahl von 3 bis 6 ist,
a eine Zahl von 1 bis 300 ist, wenn b eine Zahl von 0 bis 3 ist,
b = 0 bis 8,

unter der Voraussetzung, daß in mindestens einer der Silicon-Copolymer-Komponenten der Mischung sowohl e als auch f den Wert 1 hat und in mindestens einer der Silicon-Komponenten der Mischung entweder e oder f den Wert 0 hat.

Das Wesen der vorliegenden Erfindung besteht insbesondere darin, daß Kombinationen organofunktionell modifizierter Polysiloxane verwendet werden.

Wie die nachfolgenden Beispiele zeigen, die zur Verdeutlichung dienen, aber keinerlei Einschränkung darstellen sollen, bestehen die Wirkungen des Additivs z. B. bei der Herstellung von Polyurethanweichschäumen in der Kollapsvermeidung und der Optimierung des Erreichens niedriger Raumgewichte. Weiterhin sind nach dem Anspruch zusammengestellte Polysiloxankombinationen in der Lage, bei Einsatz in Polyurethanschaumformulierungen wie im Prozess unter Verwendung von flüssigen inerten Gasen als Treibmittel beispielsweise die Zellfeinheit signifikant zu erhöhen.

Wie dem Fachmann geläufig ist, sind sowohl die durchschnittlichen Molekulargewichte der Siloxanketten als auch der verwendeten Polyether stark vom zu stabilisierenden Schaumtyp abhängig. Als günstig haben sich z. B. für den Weichschaum, egal ob mit (siehe EP-A-0 645 226) oder ohne Verwendung unter Druck stehender Gase als Treibmittel, Siloxankettenlängen zwischen 40 und 200 sowie recht langkettige Polyether (MG bis 4000 g/Mol) erwiesen. Die Hartschaumanwendung erfordert kürzere Siloxan-(< 50 $SiR_2O$-Einheiten) und Polyetherketten (< 1500 g/Mol). Derartig unterschiedliche Stabilisatormolekulargewichte lassen keine generelle Aussage zur minimal wirksamen Kettenlänge oder zum minimal wirksamen Polyethermolekulargewicht zu. Während demzufolge im Kaltschaum schon bei kleinen Molekülen eine Kombination von Si-C-modifizierten Siloxanen mit Si-O-C-modifizierten Siloxanen signifikante Verbesserungen zeigt, sind beim Weichschaum Kombinationen höhermolekularer Copolymerer wirksam.

Für die Beurteilung der Effektivität erfindungsgemäßer Additivkombinationen wurden z. B. Polyurethanweichschäume hergestellt. Dabei wurden die zu testenden Stabilisatoren bzw. Stabilisatorkombinationen in zwei verschiedenen Rezepturen ausgetestet. Diese Rezepturen sind im folgenden mit Rezeptur A und Rezeptur B gekennzeichnet. Rezeptur A ist kritisch besonders im Hinblick auf die stabilisierenden Eigenschaften eines Stabilisators. Charakteristische Größe ist bei der Verwendung von Rezeptur A der bei der Verschäumung erhaltene Rückfall am Ende der Steigzeit. Dieser Rückfall gibt an, wie weit ein Schaumblock nach der im Weichblockschaum notwendigen Öffnung der Zellen zurücksackt, d. h. an Höhe verliert, und ist somit eine Aussage für das bei der Verschäumung erreichbare Volumen. Bei vergleichbarer Offenzelligkeit sind damit besonders niedrige Rückfälle erstrebenswert, da sich hierbei das erhaltene Schaumvolumen vergrößert. Die Formulierung B dagegen ist kritisch im Hinblick auf die Zahl der in diesem Schaum erhaltenen Zellen pro Zentimeter und gibt somit ein Maß für die Nukleierungsfähigkeit des verwendeten Schaumstabilisators/der verwendeten Schaumstabilisatorkombination. Hierbei sind, besonders auch im Hinblick auf neue technologische Verfahren, wie die Verschäumung mit flüssigem $CO_2$, hohe Zellenzahlen, d. h. feine gleichmäßige Schäume, vorteilhaft.

Für die Formulierung A werden 300 Teile eines konventionellen, käuflichen Polyethers für die Produktion von flexiblen Polyurethanschäumen, der durchschnittlich 3 OH-Gruppen bei einem Molekulargewicht von 3500 g/Mol trägt, bei guter Durchmischung mit 12 Teilen Wasser, 9 Teilen eines physikalischen Treibmittels, der angegebenen Menge der zu prüfenden Schaumstabilisierungskomponente, 0,33 Teilen Triethylendiamin und 0,6 Teilen Zinnoctoat versetzt. Nach der Zugabe von 125 Teilen Toluoldiisocyanat (eine 4 : 1-Mischung des 2,4- und des 2,6-Isomers) wird das Gemisch mit einem Rührer bei 3000 U/min für 7 s intensiv durchmischt und in eine Box geschüttet. Der entstehende Schaum wird

zur Bestimmung der folgenden Daten verwendet.

Die verwendeten Stabilisatoren sind allesamt kommerziell erhältliche Produkte der Th. Goldschmidt AG, Essen, die sich in die oben beschriebenen Gruppen der Si-C- bzw. Si-O-C-Stabilisatoren wie folgt einteilen lassen:

Si-O-C: Tegostab® B 4900, Tegostab® B 8040
Si-C: Tegostab® B 8240, Tegostab® B 8220

| Stabilisator | Rückfall in Formulierung A [cm], 0,8 Teile pro 100 Teile Polyol | Zellenzahl in Formulierung B [Zellen pro cm] bei Konzentration [pphp = parts per 100 polyol] | Status (erfindungsgemäß bzw. nicht erfindungsgemäß) |
|---|---|---|---|
| Tegostab® B 4900 | 2,4 | 7 bei 0,6 pphp | nicht erfindungsgemäß |
| Tegostab® B 8040 | 1,0 | 5 bei 0,6 | nicht erfindungsgemäß |
| Tegostab® B 8240 | 0,6 | 7 bei 0,6 pphp | nicht erfindungsgemäß |
| Mischung Tegostab® B 4900 und Tegostab® B 8240, Verhältnis 1:1 | 1,1 | 10 bei 0,6 pphp | erfindungsgemäß |
| Mischung Tegostab® B 8040 und Tegostab® B 8240, Verhältnis 1:1 | 0,8 | 11 bei 0,6 pphp | erfindungsgemäß |
| Tegostab® B 4900 | 2,4 | 10 bei 1,0 pphp | nicht erfindungsgemäß |
| Tegostab® B 8220 | 0,2 | 12 bei 1,0 pphp | nicht erfindungsgemäß |
| Tegostab® B 8240 | 0,6 | 12 bei 1,0 pphp | nicht erfindungsgemäß |
| Mischung Tegostab® B 4900 und Tegostab® B 8220, Verhältnis 1:1 | 0,8 | 13 bei 1,0 pphp | erfindungsgemäß |
| Mischung Tegostab® B 4900 und Tegostab® B 8240, Verhältnis 1:1 | 1,1 | 13 bei 1,0 pphp | erfindungsgemäß |

Der Vergleich zeigt deutlich, daß die neuen Additivkombinationen gegenüber den Einzelkomponenten aus der Gruppe der Si-C- bzw. Si-O-C-Copolymeren unter vergleichbaren Bedingungen verbesserte Eigenschaften, z. B. in bezug auf die Zellstruktur, ermöglichen. Bei den durch die Kombination der Substanzklassen möglichen Eigenschaftsniveaus handelt es sich offensichtlich nicht um das simple arithmetische Mittel der Ergebnisse der Einzelkomponenten.

**Patentansprüche**

1. Verwendung von Kombinationen organofunktionell modifizierter Polysiloxane der allgemeinen Formel I

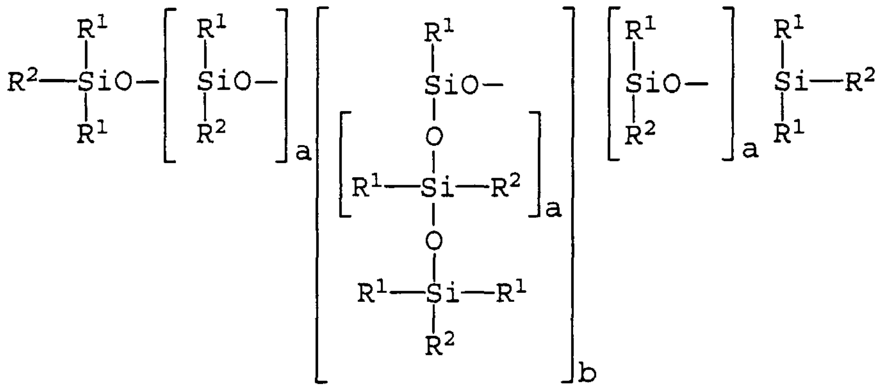

als Additiv bei der Polyurethanschaumherstellung, wobei die Reste

$R^1$ Alkylreste oder Arylreste sind,
$R^2$ $R^1$ und/oder $R^3$ und/oder $R^4$ sind,

$R^3$ ein Polyetherrest der Formel II

$-(Y)_e[O(C_2H_{4-d}R'_dO)_m(C_xH_{2x}O)_pZ]_w$ ist, mit der Maßgabe, daß
e = 0 oder 1,
w = 1 bis 4,
d = 1 bis 3,
$m \geq 1$,
x = 2 bis 4, erhältlich durch Verwendung von $C_2H_4O$, $C_3H_6O$ und $C_4H_8O$-Einheiten entweder einzeln oder in Kombination, und
$p \geq 1$ sind, und

Y ein (w+1)-bindiger Kohlenwasserstoffrest ist, der auch verzweigt sein kann,
R' ausgewählt aus der Gruppe der einwertigen, gegebenenfalls aromatischen Kohlenwasserstoffreste von $C_3$ bis $C_{18}$ ist,
Z ein Wasserstoffrest oder ein einwertiger organischer Rest ist,

die Summe m + p = 1 bis 150 ist,

$R^4$ ein Polyetherrest der Formel III

$-(F)_f[O(C_xH_{2x}O)_rZ]_g$ ist, mit der Maßgabe, daß
f = 0 oder 1,
x = 2 bis 4, erhältlich durch Verwendung von $C_2H_4O$, $C_3H_6O$ und $C_4H_8O$-Einheiten entweder einzeln oder in Kombination,
g = 1 bis 4 und
$r \geq 1$ sind,

F ein (g+1)-bindiger Kohlenwasserstoffrest ist, der auch verzweigt sein kann,

a eine Zahl von 1 bis 100 ist, wenn b eine Zahl von 6 bis 8 ist,
a eine Zahl von 1 bis 200 ist, wenn b eine Zahl von 3 bis 6 ist,
a eine Zahl von 1 bis 300 ist, wenn b eine Zahl von 0 bis 3 ist,
b = 0 bis 8,

unter der Voraussetzung, daß in mindestens einer der Silicon-Copolymer-Komponenten der Mischung sowohl e als auch f den Wert 1 hat und in mindestens einer der Silicon-Komponenten der Mischung entweder e oder

f den Wert 0 hat.

2. Verwendung eines Additivgemisches gemäß Anspruch 1 in Kombination mit anderen oberflächenaktiven Komponenten bei der Herstellung von Polyurethanen.

3. Verwendung eines Additivgemisches gemäß Anspruch 1 bei der Herstellung von Polyurethanen unter Verwendung von unter Druck stehenden inerten Gasen als Treibmittel.

Europäisches Patentamt

# EUROPÄISCHER RECHERCHENBERICHT

Nummer der Anmeldung
EP 00 10 2482

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 309 508 A (BASKENT FEYYAZ O ET AL) 5. Januar 1982 (1982-01-05)<br>* Spalte 3, Zeile 13 - Spalte 5, Zeile 3 *<br>* Beispiele V,XI; Tabelle C *<br>* Spalte 8, Zeile 49 - Zeile 67 * | 1-3 | C08G18/50<br>C08J9/00<br>C08G77/46<br>C08L83/12 |
| A | US 4 347 330 A (DEMOU JOHN G ET AL) 31. August 1982 (1982-08-31)<br>* Spalte 3, Zeile 3 - Zeile 23 *<br>* Beispiel 1; Tabelle I * | 1,2 | |
| A | US 4 119 582 A (MATSUBARA KIYOSHI ET AL) 10. Oktober 1978 (1978-10-10)<br>* Spalte 1, Zeile 54 - Spalte 5, Zeile 68 *<br>* Anspruch 1; Beispiel 1; Tabelle 2 * | 1,2 | |
| A | US 4 022 941 A (PROKAI BELA ET AL) 10. Mai 1977 (1977-05-10)<br>* Spalte 2, Zeile 33 - Spalte 3, Zeile 25 *<br>* Beispiel 30; Tabelle III *<br>* Anspruch 1 * | 1-3 | |

RECHERCHIERTE SACHGEBIETE (Int.Cl.7)

C08G
C08J
C08L

Der vorliegende Recherchenbericht wurde für alle Patentansprüche erstellt

| Recherchenort | Abschlußdatum der Recherche | Prüfer |
|---|---|---|
| DEN HAAG | 24. Mai 2000 | Neugebauer, U |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 00 10 2482

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-05-2000

| Im Recherchenbericht angeführtes Patentdokument | Datum der Veröffentlichung | Mitglied(er) der Patentfamilie | Datum der Veröffentlichung |
|---|---|---|---|
| US 4309508 A | 05-01-1982 | AR 225820 A | 30-04-1982 |
| | | AT 11558 T | 15-02-1985 |
| | | AU 547787 B | 07-11-1985 |
| | | AU 7240381 A | 22-04-1982 |
| | | BR 8104106 A | 16-03-1982 |
| | | CA 1171600 A | 24-07-1984 |
| | | DE 3168613 D | 14-03-1985 |
| | | EP 0043110 A | 06-01-1982 |
| | | ES 503482 D | 16-04-1982 |
| | | ES 8203400 A | 01-07-1982 |
| | | JP 1466865 C | 10-11-1988 |
| | | JP 60186519 A | 24-09-1985 |
| | | JP 63016405 B | 08-04-1988 |
| | | JP 1332736 C | 28-08-1986 |
| | | JP 57044660 A | 13-03-1982 |
| | | JP 60056752 B | 11-12-1985 |
| | | MX 158428 A | 31-01-1989 |
| | | ZA 8104280 A | 28-07-1982 |
| US 4347330 A | 31-08-1982 | CA 1192350 A | 20-08-1985 |
| US 4119582 A | 10-10-1978 | JP 1135455 C | 14-02-1983 |
| | | JP 51091997 A | 12-08-1976 |
| | | JP 57028415 B | 16-06-1982 |
| US 4022941 A | 10-05-1977 | US 3947386 A | 30-03-1976 |
| | | US 4022722 A | 10-05-1977 |

EPO FORM P0461

Für nähere Einzelheiten zu diesem Anhang : siehe Amtsblatt des Europäischen Patentamts, Nr.12/82